# FASCICULE DE BREVET EUROPEEN

(11) **EP 1 779 149 B1**
(45) Date de publication et mention de la délivrance du brevet: **03.12.2014**
(21) Numéro de dépôt: 05793714.6
(22) Date de dépôt: 03.08.2005
(51) Int. Cl.: G01W 1/10

(54) **SYSTEME DE PREVISIONS CLIMATIQUES**
KLIMAPROGNOSESYSTEM
CLIMATIC FORECAST SYSTEM

(30) Priorité: 03.08.2004 FR 0408603
(43) Date de publication de la demande: 02.05.2007
(73) Titulaire: METNEXT, 75009 Paris (FR)
(72) Inventeur: LOUKOS, Harilaos, F-75010 Paris (FR)
(74) Mandataire: Novagraaf Technologies
(86) Numéro de dépôt international: PCT/FR2005/002010
(87) Numéro de publication internationale: WO 2006/024773

(56) Documents cités:
- US-A- 5 461 699
- US-A1- 2003 220 740
- US-B1- 6 535 817
- AHRENS B: "Rainfall downscaling in an Alpine watershed applying a multiresolution approach" JOURNAL OF GEOPHYSICAL RESEARCH AMERICAN GEOPHYS. UNION USA, vol. 108, no. D8, 27 avril 2003 (2003-04-27), pages CIP13-1, XP002320412 ISSN: 0148-0227

## Description

La présente invention se rapporte au domaine des systèmes informatiques de prévision climatique exploitant les observations fournies par différentes stations de mesure réparties sur un territoire géographique.

Un des buts de la présente invention est de proposer une solution technique utilisant des moyens informatiques et de communication compatibles avec des traitements légers pour la fourniture de prévisions climatiques qui nécessitaient dans l'art antérieur des calculateurs de puissance supérieure avec des temps de traitement très supérieurs à ceux qui résultent de la mise en oeuvre de l'invention.

La prévision multi-modèles, nécessitant des moyens de calculs importants, a connu des progrès rapides dans les dernières années et est devenue le moyen le plus efficace pour la prévision climatique. Cependant, si la prévision multi-modèles est *globalement* la meilleure solution, elle peut être *localement* moins performante que la prévision statistique.

Comme la résolution en sortie des systèmes de prévisions actuels reste relativement basse, il subsiste un besoin de mise à l'échelle (ou *downscaling*).

Un des buts de la présente invention est de réaliser des prévisions selon plusieurs méthodes, de les pondérer afin de synthétiser de façon globale des prévisions les plus fiables possible.

Le système de prévision selon la présente invention vise à combiner la prévision multi-modèles avec d'autres méthodes de prévision comme la prévision statistique, de manière à exploiter les avantages respectifs des différentes méthodes de prévision, le but étant d'obtenir les résultats les plus fiables possibles tout en conservant des moyens techniques raisonnables.

La présente invention se rapporte plus particulièrement à un système de prévision climatique, mettant en oeuvre au moins un calculateur informatique comportant notamment un processeur et une mémoire, des moyens d'acquisition à distance de données numériques à travers un réseau informatique ou un réseau de télécommunications

Selon un premier aspect, la présente invention consiste notamment à synthétiser les prévisions issues de centres opérationnels et les transposer à l'échelle locale en y ajoutant de l'information issue de modèles statistiques développés spécifiquement. Le principe des modèles statistiques est fondé sur la mise en relation des historiques d'observations de terrain fournies par des centres météorologiques nationaux ou privés, avec des données de grande échelle fournies par les centres opérationnels publics ou privés..

Selon un autre aspect, la présente invention porte également sur la détermination de prévisions par l'utilisation de modèles dits « simples » d'une variable particulière.

Enfin, l'invention permet aussi une combinaison qui n'est pas une simple juxtaposition des différents modèles ci-dessus, dit « modèles hybrides ».

L'art antérieur connaît déjà, par le brevet américain N° US 6 535 817 (Florida State Research), une méthode de synthèse des prévisions à l'aide de données historiques et de prévisions. Plus précisément, l'invention protégée par ce brevet américain se rapporte à un procédé pour générer un modèle précis de prévisions climatiques comprenant les étapes consistant à :
- collecter des informations historiques de prévisions à partir de différents modèles ;
- accumuler des données d'observations ;
- comparer les données de prévisions historiques et les observations pour déterminer la performance historique des différents modèles ;
- générer un super-ensemble multi-modèle de modèles climatiques basé sur les performances de chacun des modèles.

L'art antérieur connaît également, par le brevet américain US 5 461 699 (IBM), un système de prévision comprenant un réseau de neurones tri-couche (ou plus généralement multicouche). Ce réseau est appliqué aux données climatiques et entraîné sur de telles données. Le premier noeud de la couche d'entrée est connecté aux prévisions statistiques alors que les autres noeuds sont reliés à une donnée historique de l'ensemble des données historiques.

On connaît également dans l'état de la technique la demande de brevet PCT WO 94/16394 (Strategic Weather) qui concerne un système et un procédé de prévision évoluée de l'impact du climat sur des applications de planification de gestion. Plus particulièrement, cette demande internationale se rapporte à un procédé et système informatisé avec lesquels des prévisions météorologiques sont introduites dans un modèle prédictif qui quantifie des rapports d'impacts météorologiques historiques entre des ensembles de données, les prévisions étant utilisées pour prévoir l'impact futur du climat sur des plans de gestion. Le modèle prédictif peut utiliser une régression multiple ou un réseau neuronal. Dans une application se rapportant à la vente au détail, le procédé et le système informatiques présentent un modèle prédictif d'impact météorologique basé sur des corrélations établies entre des conditions météorologiques historiques et des données transactionnelles de points de vente. Le modèle d'impact météorologique est couplé aux prévisions météorologiques afin d'ajuster des plans de gestion à des fins d'achat, de distribution, d'élaboration du budget, de promotion et de publicité. Une interface graphique d'utilisateur permet d'assimiler aisément l'analyse en ce qui concerne des applications spécifiques de gestion.

L'art antérieur connaît également, par la demande de brevet PCT WO 97/26613 (Strategic Weather), un système et un procédé de prévision du niveau d'affaire en fonction de la météorologie. Cette demande internationale concerne donc un système et un procédé de prévision du niveau de vente à venir. Le système comporte une mémoire conservant une base de données historique des ventes, et une base de données de prévisions météorologiques. Un module d'analyse détermine la mesure dans laquelle le niveau passé d'affaire au détail pour plusieurs produits en différents points de vente a été affecté par les conditions météorologiques, en se basant sur la base de données d'historique des ventes et la base de données de prévisions météorologiques. Un module de configuration, couplé au module d'analyse, estime le niveau d'affaire au détail futur attendu pour ces produits dans des magasins, pour plusieurs périodes futures, en utilisant la base de données météorologiques et les résultats produits par le module d'analyse. Une interface graphique utilisateur, couplée au module d'analyse et au module de configuration, permet à l'utilisateur de visualiser et de manipuler les résultats produits par les modules d'analyse et de configuration, et de prévoir ainsi le niveau d'affaire au détail à venir pour les produits concernés dans les points de vente considérés.

Enfin, on connaît également la demande de brevet canadien CA 2 199 588 (Hoffman Efrem) qui propose un système hiérarchique de reconnaissance et d'identification de configurations matricielles de données.

L'art antérieur connaît également, par la demande brevet PCT WO 02/21381 (Planalytics), un système, procédé et programme informatique permettant d'obtenir des prévisions conjoncturelles à court terme en fonction du temps météorologique.

On connaît aussi dans l'état de la technique, le brevet américain US 6 584 447 Planalytics qui se rapporte à un système et à un procédé pour prévoir les performances futures de ventes au détail. C'est un système classique comportant un dispositif de stockage et notamment unes base de données relatives aux données de vente ainsi qu'une base de données relative aux données de météo historiques et une autre base de données pour les données prévisionnelles.

On connaît également, par la demande de brevet européen EP 1 324 253 (Météo France), un procédé de fourniture d'un indice météorologique. Ce procédé pour fournir un indice météorologique comprend les étapes consistant à : mesurer au moins un phénomène météorologique à au moins une position géographique pour obtenir au moins une donnée météorologique; obtenir au moins une donnée dite humaine liée à au moins une grandeur de nature économique ou démographique concernant au moins une zone géographique incluant la position respective ; et calculer un indice à partir de ces données.

Dans le domaine de la prévision climatique, on connaît également les publications scientifiques suivantes :
- R. Cano, A.S. Cofiño, J.M. Gutiérrez and M.A. Rodriguez, Self-Organizing Maps for Statistical Downscaling in Short-Term Forecasting. A Case Study in the Iberian Peninsula, Applied Meteorology (submitted), April 2002 ;
- White, W. B., 2000, Influence of the Antarctic Circumpolar Wave on Australian Précipitation from 1958 to 1997, J. Climate, 13, 2125-2141 ;
- Marshall JD, and F. Molteni, 1993, Towards a dynamical understanding of planetary scale flow regimes, J. Atmos. Scie, 50, 1792-1818 ;
- Michelangeli, PA, R. Vautard and B. Legras, 1995, Weather Regimes: recurrence and quasi stationarity, J. Atmos. Sci., 52, 1237-1256 ;
- Michelangeli, PA, and R. Vautard, 1998, The dynamics of Euro Atlantic blocking onsets, Quart. J. Roy. Meteor. Soc., 124, 1045-1070 ;
- Silverman, BW, 1986, Density estimation for statistics and data analysis, Chapman and Hall.

Un des buts principaux de la présente invention consiste en la réalisation de prévisions locales les plus fiables possibles, et de façon efficace, c'est-à-dire notamment avec des temps réduits de calculs, et avec des moyens techniques raisonnables.

Un autre but de l'invention est de réussir à obtenir des synergies entre différents sous-modules prédictifs, c'est à dire de combiner les sous-modules en conservant leurs avantages respectifs et en palliant à leurs lacunes, et non de réaliser une simple juxtaposition de différents sous-modules déjà connus.

Si les solutions connues de l'art antérieur adressaient des problèmes très précis, de portée extrêmement restreinte, la présente invention se propose de répondre à la problématique délicate de la prévision de fluctuations climatiques de manière bien plus globale.

A cet effet, la présente invention concerne, dans son acception la plus générale, un système de prévisions selon la revendication 1.

De préférence, ledit système comprend, en outre, :
- des moyens de synthèse desdites prévisions d'ensemble fournissant en sortie au moins une prévision multi-modèle, à laquelle est associée une densité de probabilité d'au moins une variable environnementale, lesdits moyens de synthèse comprenant des algorithmes de synthèse multi-modèles ;
- des moyens de synthèse finale et de *benchmarking,* combinant, notamment, les données issues du module de prévision multi-modèle avec celles du module de prévision statistique.

Avantageusement, ledit système comprend, en outre, des moyens de prévision numérique simple prenant en entrée lesdites observations et fournissant en sortie des prévisions numériques simples de variables environnementales, lesdits moyens de prévision numérique simple comprenant des modèles simples de circulation générale.

Avantageusement, ledit système comprend, en outre, des moyens de prévision statistique prenant en entrée lesdites observations et fournissant en sortie au moins une prévision statistique d'au moins une variable environnementale, lesdits moyens de prévision statistique comprenant des modèles statistiques.

De préférence, ledit système comprend en outre des moyens de traitement de désagrégation (*downscaling*), de nature numérique et/ou statistique ;

De préférence, ledit système comprend en outre, à l'étape de *benchmark* et de synthèse générale, des moyens de rétroaction sur lesdits moyens de prévision.

Selon un mode de réalisation, lesdits moyens de synthèse multi-modèles, de prévision statistique, de prévision hybride, de *downscaling*, de *benchmarking,* ou de synthèse générale utilisent des méthodes statistiques bayésiennes.

De préférence, lesdits moyens de prévision et de traitement statistique utilisent des méthodes statistiques faisant intervenir les réseaux de neurones.

Selon une variante, lesdits moyens de prévision et de traitement statistique effectuent une régression non linéaire par réseau de neurones.

Selon une autre variante, lesdits moyens de prévisions statistiques mettent en oeuvre des modèles d'analogie.

Selon une variante particulière, lesdits moyens de prévisions statistiques mettent en oeuvre des modèles de persistance.

Avantageusement, ledit système comprend en outre des moyens d'interfaçage avec au moins un centre opérationnel de prévision (régionaux, nationaux, ou internationaux, et publics ou privés) transmettant lesdites prévisions d'ensemble (mono-modèle ou multi-modèles).

La présente invention se rapporte également à un procédé de prévisions climatiques pour la mise en oeuvre du système, comportant les étapes suivantes :
- une étape d'acquisition d'observations ;
- une étape d'acquisition de prévisions numériques ;
- une étape de prévision hybride.

De préférence, ledit procédé comprend, en outre, :
- une étape de prévision numérique simple ;
- une étape de prévision statistique ;
- une étape de prévision multi-modèle ;
- une étape de traitement de type désagrégation ou réduction d'échelle ;
- une étape de *benchmarking,* et de synthèse générale desdites prévisions ;
- une étape de rétroaction lors de l'étape de *benchmarking* et de synthèse générale.

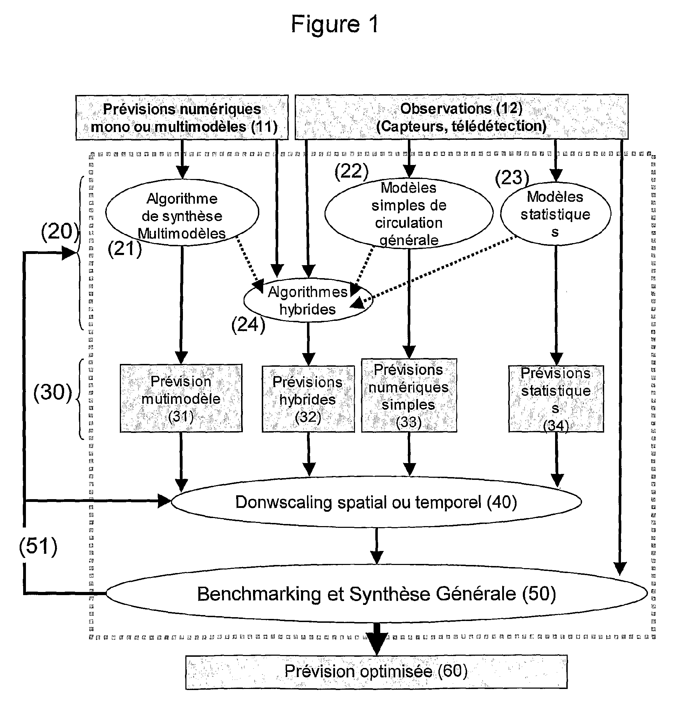

On comprendra mieux l'invention à l'aide de la description, faite ci-après à titre purement explicatif, d'un mode de réalisation de l'invention, en référence à la figure 1 annexée qui illustre de façon schématique le système selon l'invention.

La qualité des prévisions dépend non seulement de la zone géographique et des saisons, mais également des modèles. Il convient donc d'utiliser les prévisions des différents modèles sur la zone où ils sont les meilleurs, ce qui implique la construction d'un super-modèle prenant en compte les modèles sources.

Pour chaque modèle, par exemple de type météo à 10 jours, climatique sur plusieurs mois, ou de type changement climatique sur un siècle, la résolution géographique est améliorée. Elle est transposée par des méthodes statistiques et numériques sur une échelle pouvant aller jusqu'à quelques kilomètres carrés.

Le système selon l'invention comporte des moyens de prévision statistique et de *downscaling.* Cela consiste à identifier sur les données historiques, les structures de grande échelle qui favorisent l'apparition des événements de petite échelle que l'on cherche à prévoir. Dans le cas où les structures grande échelle sont des précurseurs des événements locaux, on parlera de prévision statistique, sinon de *downscaling* statistique.

L'invention met également en oeuvre des procédés de *benchmark* des prévisions opérationnelles et des prévisions statistiques. Cela consiste à évaluer de façon continue :
- la fiabilité de chacune des méthodes afin d'évaluer leur robustesse respective ;
- la concordance des prévisions pour en évaluer globalement la robustesse ;
- la combinaison de prévisions afin d'apporter la prévision optimale.

Selon un mode de réalisation préféré, le système selon l'invention met en oeuvre des réseaux de neurones pour l'analyse statistique dans le domaine climatique. Ces réseaux de neurones permettent d'abord une approche non-linéaire de l'analyse et un traitement rapide d'un grand flux de données.

Enfin, l'un des buts de la présente invention est, à l'aide des prévisions haute résolution, de proposer un plan de gestion adapté à l'entreprise, par exemple pour l'optimisation des ventes. À l'aide des historiques des ventes et de la corrélation entre climat et vente, une synthèse des données peut être effectuée afin d'intégrer les prévisions climatiques ou météo dans le plan managérial.

Dans le domaine de la prévision climatique, on entend par « modèle numérique » un modèle mathématique de résolution d'équations d'un système de lois physiques (mais parfois aussi chimiques et/ou biologiques) sur des conditions initiales et aux limites adéquates par une méthode numérique qui permet l'intégration du système d'équations dans le temps et dans l'espace.

En référence à la figure 1, les prévisions numériques mono- ou multi-modèles (11) sont les prévisions d'ensemble ou déterministes, issues de modèles de circulation atmosphérique globaux couplés ou non à d'autres modèles (océan, biosphère, cryosphère, chimie, etc.) plusieurs types de prévisions dont les principales sont les prévisions météorologiques fournies par le ECMWF (*European Centre for Medium range Weather Forecasts*) ou le NCEP (*National Center for Environmental Prédiction*), les prévisions saisonnières du ECMWF, de NCEP ou du MetOffice et les simulations du changement climatique.

Les prévisions numériques mono- ou multi-modèles portent sur des variables environnementales (à titre d'exemple : température, précipitations, taux de CO₂, taux d'ozone, ...) ou des index climatiques construits à partir de ces variables environnementales. Notons que les principaux index climatiques sont :
- la pression atmosphérique caractérisée par le SOI (*Southern Oscillation Index*), la NAO (*North Atlantique Oscillation*), la PNA (*Pacific North America*), la PDO (*Pacific Decadal Oscillation*),
- la température de la mer sur des régions océaniques particulières (Pacifique équatorial dans le cas d'El Nino),
- ou encore le vent avec la position de l'ITCZ (*Intertropical Convergence Zone*).

La présente invention ne se limite pas à ces différents index et reste valable pour des modèles utilisant un plus grand nombre d'indexes.

Les prévisions dépendent grandement des observations effectuées (12). Ces observations sont tout type d'observations mesurées par tout type d'instruments au sol ou aéroportés mais aussi les observations simulées par ordinateur. Sont couramment utilisés des capteurs locaux ou des moyens de télédétection. L'acquisition de ces observations au système selon la présente invention est réalisée par des moyens d'acquisition tel que FTP (*File Transfert Protocole*) mettant en oeuvre un réseau informatique (IP) ou de communications.

Ainsi on distinguera les mesures réalisées de façon ponctuelle en un point géographique précis. Pour ces mesures, on utilise des capteurs de surface comme les stations météorologiques automatiques, le Synop ou le Metar. Sont aussi utilisés des ballons sondes, pour les airs, ou des bouées, pour le milieu maritime.

La deuxième grande famille des observations concerne les observations synoptiques par télédétection au sol. Les matériels utilisés sont, de façon non exhaustive, le LIDAR, le Radar HF et les profileurs.

Par opposition à la télédétection au sol, la télédétection aéroportée fournit des observations concernant le vent, par exemple au moyen d'un LIDAR aéroporté ou d'un SAR (*Synthetic Aperture Radar*), mais aussi des mesures de température à la surface de la mer ou des mesures de couverture végétale, ces mesures étant réalisées par des satellites.

Des observations réalisées sont déduits certains index caractérisant, par exemple, la pression atmosphérique (index SOI, oscillations NAO ou PNA, onde de Brenstator-Kushnir), la température de la mer (en suivant le phénomène El Nino), le vent (position de l'ITCZ) et bien d'autres index.

La troisième famille d'observations est celle des observations simulées par ordinateur. En effet, les modèles numériques peuvent être utilisées pour simuler ou estimer a *posteriori* (c'est-à-dire dans le passé) la valeur des variables environnementales (par exemple la température, la pression) sur des endroits du globe dépourvus d'instruments de mesure. On parle alors *d'Analyses* ou de *Reanalyses*. Par exemple le centre NCEP ou le centre ECMWF fournissent ce type de données (respectivement *NCEP Reanalysis et ECMWF Reanalysis*) sur de nombreuses variables et sur plusieurs dizaines d'années.

Comme illustré par la figure 1, l'ensemble de ces observations (12) et de ces prévisions numériques mono- ou multi-modèles (11) fournissent par la présente invention une prévision climatique optimisée (60). Pour cela, plusieurs algorithmes et modèles (20) sont mis en oeuvre sur les observations et les prévisions numériques mono- ou multi-modèles. Les prévisions (30) issues de ces algorithmes et modèles sont, ensuite, optimisées par deux étapes successives : la descente d'échelle ou *downscaling* (40) et le *benchmarking* (50), étape consistant à évaluer la fiabilité et la robustesse des prévisions.

Par l'utilisation d'un algorithme de synthèse multi-modèles (21), les prévisions numériques mono- ou multi-modèles, uniquement, fournissent une prévision multi-modèles (31) qui est, par exemple, une densité de probabilité des valeurs d'une variable, plus éventuellement d'autres moments statistiques.

Cet algorithme met en oeuvre une synthèse sur la base des prévisions numériques seules qui peut, comme décrit dans la méthode des Kernels (Silverman 1986), être une fonction de densité de probabilité (PDF - *Probability Density Function*) en un point à partir des individus d'un ensemble mono-modèle. Alternativement, cette méthode peut être étendue à des modèles 2D ou 3D, comme dans la méthode de S. Corti. De préférence, cette méthode est étendue aux ensembles multi-modèles.

Le traitement des observations (12) fournit aussi bien des prévisions statistiques (34) que des prévisions numériques simples (33) mais fournit aussi, en association avec le traitement des prévisions numériques mono- ou multi-modèles (11), des prévisions hybrides (32).

Les prévisions numériques simples (33) sont des prévisions d'une variable particulière, soit déterministe, soit une fonction de densité de probabilité de la variable, et sont obtenues grâce à des modèles simples de circulation générale (22). Ces modèles sont particulièrement bien adaptés à une problématique particulière et présentent l'avantage de nécessiter peu de moyens de calculs. Ils sont, usuellement, spécifiques à une région particulière. De nombreux modèles simples de circulation générale existent déjà. Par exemple, pour la prévision de régimes de temps pour les moyennes latitudes, un modèle atmosphérique simple, comme un de ceux qui ont été développés par Marshall et Molteni, peut être mis en oeuvre. Le modèle Cane-Zebiak, développé par les deux scientifiques du même nom, peut être utilisé pour la prévision de la température de surface de la mer dans le pacifique équatorial.

Ces modèles simples peuvent être des modèles simplifiés de ceux utilisés pour l'obtention des prévisions numériques mono- ou multi-modèles (11).

Les modèles statistiques (23) génèrent des prévisions statistiques (34), prévisions fondées sur des relations statistiques déterminées par l'analyse historique des données disponibles obtenues par les observations. Ces modèles se basent sur des notions telles que la persistance, l'autorégression ou l'analogie et réalisent des combinaisons de celles-ci. La persistance consiste à maintenir des anomalies du ou des mois précédents. L'utilisation de modèles autorégressifs permet de prévoir, par exemple, le mois à venir en fonction du mois en cours et/ou des mois passés. Il existe différentes natures de modèles autorégressifs dont les plus connus sont les modèles autorégressifs de type ARMA (*Auto Regressif Moving Average*) et les modèles autorégressifs neuronaux qui se basent sur des réseaux de neurones. Les modèles **analogues** réalisent un lien statistique entre des variables « prédicteurs » au mois M et une variable « prédictant » au mois M+X, où X est un nombre entier. Les modèles analogues sont, par exemple, utilisés pour la prévision des précipitations en Australie à partir des températures de surface de l'océan austral lors des mois précédents comme décrit dans White 2000. Les prévisions statistiques ainsi générées fournissent une densité de probabilités d'une variable ainsi que d'autres moments statistiques.

Enfin les modèles hybrides (24) génèrent des prévisions hybrides (32) sous forme de densité de probabilité de valeur d'une variable en un point, à partir des prévisions numériques mono- ou multi-modèles (11) et/ou des données d'observations (12). Ces modèles sont une combinaison et non une simple juxtaposition d'au moins deux modèles pris parmi des modèles statistiques (23), des modèles simples de circulation générale (22) et des algorithmes de synthèse multi-modèles (21). Plus précisément, les modèles hybrides combinent les approches méthodologiques et les outils suivant lesquels sont construits les modèles précédents. Un modèle hybride générera une fonction de densité de probabilités à partir d'une valeur particulière (par exemple la médiane) issue d'une densité de probabilités générée à partir d'un des modèles précédents (par exemple des algorithmes de synthèse multi-modèles) et de la géométrie d'une fonction de densité de probabilités issue d'un autre type de modèle (par exemple un modèle statistique). La PDF des modèles hybrides sera donc générée à partir d'une combinaison d'au moins deux modèles et non de la combinaison des résultats d'au moins deux ou plusieurs modèles.

Le procédé selon la présente invention réalise une étape de réduction d'échelle ou de désagrégation (*downscaling*) (40), aussi bien spatiale que temporelle, sur les prévisions obtenues par les modèles précédemment décrits, à savoir les prévisions multi-modèles (31), hybrides (32), numériques simples (33) et statistiques (34). L'art antérieur connaît déjà des procédés permettant d'effectuer le *downscaling* de prévisions. L'étape de *downscaling* permet notamment de calculer des scénarios futurs à petite échelle, c'est-à-dire propres à un site, au moyen d'un modèle climatique mondial (à grande échelle). La prévision obtenue par cette étape est sous forme de valeur ou de densité de probabilité de valeur d'une variable en un point dont la précision géographique et/ou temporelle est nettement supérieure à celle des données initiales. On distingue trois types de réduction d'échelle. D'une part, le ***downscaling* numérique** se base sur des modèles numériques régionaux (MM5, HIRLAM, Méso NH), des modèles numériques régionaux emboîtés (MM5) ou des modèles numériques CFD (*Computational Fluid Dynamics*) (MésoNH, WRF). D'autre part, le ***downscaling* statistique** réalise une relation statistique entre soit une variable modèle et une variable locale, par exemple par une régression linéaire au moyen d'un réseau de neurones ou par une technique d'interpolation géostatistique (Kriging), soit une variable modèle prédicteur et une variable prédictant par des modèles analogues qui classifient les structures (*pattern*) à grande échelle et établit des liens avec les variables locales (technique SOM/Kohonen). Ces structures peuvent être des structures atmosphériques (champs de pression, de température) ou des structures océaniques (champs de température de surface, de courant marin). Enfin le ***downscaling* hybride** est une combinaison statistique d'au moins une partie des champs ayant déjà subi une réduction d'échelle numérique, par combinaison linéaire ou non. On peut, par exemple, utiliser une technique de combinaison par réseau de neurones (techniques SOM *Self Organizing Maps*).

Toujours en référence à la figure 1, la dernière étape du procédé selon l'invention consiste à un *benchmarking* (50) et une synthèse générale des prévisions générées par les étapes précédentes.

L'aspect *benchmarking* de cette étape réside en un calcul de la fiabilité de chaque prévision, issue ou non de l'étape de *downscaling* (40), à partir de l'historique de prévisions disponibles et des observations (12). Il est possible d'utiliser des méthodes de scores probabilistes (ROC score) ou de scores déterministes.

Quant à la synthèse générale, il s'agit plus précisément d'une analyse et d'une synthèse multi-méthodes de prévisions. Par exemple, elle peut être réalisée par la comparaison des fonctions de densité de probabilités des prévisions issues des étapes précédentes, selon le test de Kolmogorov Smirnov, puis par la compilation des fonctions de densité de probabilités suivant leur score de fiabilité. On peut également utiliser des méthodes statistiques bayésiennes afin d'effectuer la synthèse des différentes PDF.

Afin d'optimiser les prévisions fournies par le système selon la présente invention, des mécanismes de rétroaction (51) sont mis en oeuvre au moment de la synthèse finale. Cette rétroaction a lieu sur les modèles et algorithmes (20) et/ou sur le module de *downscaling* (40). L'objectif est de sélectionner les prévisions les plus pertinentes en fonction d'un ou de plusieurs critères prédéterminés et d'optimiser les paramètres des différents modules (20 et 40) sur la base des observations (12).

L'invention est décrite dans ce qui précède à titre d'exemple. Il est entendu que l'homme du métier est à même de réaliser différentes variantes de l'invention sans pour autant sortir du cadre du brevet comme il est défini dans les revendications suivantes.

## Revendications

1. Système de prévisions climatiques pour la génération d'une prévision optimisée, mettant en oeuvre au moins un calculateur informatique comportant notamment un processeur et une mémoire, des moyens d'acquisition à distance de données numériques à travers un réseau numérique, lesdites données numériques étant des observations et des prévisions numériques mono-modèle ou multi-modèles, le système comportant, en outre, des moyens de prévision hybride pour recevoir en entrée lesdites observations et lesdites prévisions numériques mono-modèle ou multi-modèles et fournissant en sortie au moins une prévision hybride le système étant **caractérisé en ce que** lesdits moyens de prévision hybride fournissent la prévision hybride sous forme de densité de probabilité et comprennent la génération d'une fonction de densité de probabilité à partir d'au moins la géométrie d'une fonction de densité de probabilité générée par un premier modèle et d'une valeur particulière comme la médiane issue d'une densité de probabilité générée par un second modèle d'un autre type, le premier modèle et le second modèle étant choisis parmi des types de modèles statistiques, des modèles simples de circulation générale et des algorithmes de synthèse multi-modèles.

2. Système de prévisions climatiques selon la revendication 1, **caractérisé en ce qu'**il comprend en outre :
• des moyens de synthèse desdites prévisions numériques mono-modèle ou multi-modèles fournissant en sortie au moins une prévision multi-modèle, à laquelle est associée une densité de probabilité d'au moins une variable environnementale, lesdits moyens de synthèse comprenant des algorithmes de synthèse multi-modèles;
• des moyens de synthèse finale et de benchmarking, combinant, notamment, les données issues du module de prévision multi-modèle avec celles du module de prévision statistique.

3. Système de prévisions climatiques selon la revendication 2, **caractérisé en ce qu'**il comprend en outre des moyens de prévision numérique simple prenant en entrée lesdites observations et fournissant en sortie des prévisions numériques simples de variables environnementales, lesdits moyens de prévision numérique simple comprenant des modèles simples de circulation générale.

4. Système de prévisions climatiques selon la revendication 3, **caractérisé en ce qu'**il comprend en outre des moyens de prévision statistique prenant en entrée lesdites observations et fournissant en sortie au moins une prévision statistique d'au moins une variable environnementale, lesdits moyens de prévision statistique comprenant des modèles statistiques.

5. Système de prévisions climatiques selon la revendication 4, **caractérisé en ce qu'**il comprend en outre des moyens de traitement de désagrégation (downscaling), de nature numérique et/ou statistique.

6. Système de prévisions climatiques selon l'une quelconque des revendications précédentes, **caractérisé en ce qu'**il comprend en outre, à l'étape de benchmark et de synthèse générale, des moyens de rétroaction sur lesdits moyens de prévision (20).

7. Système de prévisions climatiques selon la revendication 5, **caractérisé en ce que** lesdits moyens de synthèse multimodèles, de prévision statistique, de prévision hybride, de downscaling, de benchmarking, ou de synthèse générale utilisent des méthodes statistiques bayésiennes.

8. Système de prévisions climatiques selon l'une quelconque des revendications 1 à 6, **caractérisé en ce que** lesdits moyens de prévision et de traitement statistique utilisent des méthodes statistiques faisant intervenir les réseaux de neurones.

9. Système de prévisions climatiques selon l'une quelconque des revendications 1 à 6, **caractérisé en ce que** lesdits moyens de prévisions statistiques mettent en oeuvre des modèles d'analogie.

10. Système de prévisions climatiques selon l'une quelconque des revendications 1 à 6, **caractérisé en ce que** lesdits moyens de prévisions statistiques mettent en oeuvre des modèles de persistance.

11. Système de prévisions climatiques selon l'une quelconque des revendications précédentes, **caractérisé en ce qu'**il comprend en outre des moyens d'interfaçage avec au moins un centre opérationnel de prévision (régionaux, nationaux, ou internationaux, et publics ou privés) transmettant lesdites prévisions numériques mono-modèle ou multi-modèles .

12. Procédé de prévisions climatiques pour la mise en oeuvre du système selon l'une au moins des revendications précédentes, comportant les étapes suivantes:
• une étape d'acquisition d'observations;
• une étape d'acquisition de prévisions numériques;
• une étape de prévision hybride.

13. Procédé de prévisions climatiques selon la revendication précédente, **caractérisé en ce que** ledit procédé comprend, en outre, :
• une étape de prévision numérique simple;
• une étape de prévision statistique;
• une étape de prévision multi-modèle;
• une étape de traitement de type désagrégation ou réduction d'échelle;
• une étape de benchmarking et de synthèse générale desdites prévisions;
• une étape de rétroaction lors de l'étape de benchmarking et de synthèse générale.

## Patentansprüche

1. Wettervorhersagesystem zum Generieren einer optimierten Vorhersage, das mindestens einen Computer, der insbesondere einen Prozessor und einen Speicher umfasst, Mittel zum Fernerfassen digitaler Daten über ein digitales Netzwerk, wobei die digitalen Daten Beobachtungen und numerische Vorhersagen mit einem einzelnen Modell oder mit mehreren Modellen sind, einsetzt,
wobei das System ferner hybride Vorhersagemittel umfasst, um als Eingabe die Beobachtungen und die numerischen Vorhersagen mit einem einzelnen Modell oder mit mehreren Modellen zu empfangen, und als Ausgabe mindestens eine hybride Vorhersage bereitstellt,
wobei das System **dadurch gekennzeichnet ist, dass** die hybriden Vorhersagemittel die hybride Vorhersage in Form einer Wahrscheinlichkeitsdichte bereitstellen und das Generieren einer Wahrscheinlichkeitsdichtefunktion mindestens aus der Geometrie einer Wahrscheinlichkeitsdichtefunktion, die von einem ersten Modell generiert wird, und aus einem bestimmten Wert, wie dem Mittelwert, der aus einer Wahrscheinlichkeitsdichte stammt, die durch ein zweites andersartiges Modell generiert wird, umfassen, wobei das erste Modell und das zweite Modell aus statistischen Modelltypen, einfachen globalen Zirkulationsmodellen und Synthesealgorithmen mit mehreren Modellen gewählt werden.

2. Wettervorhersagesystem nach Anspruch 1, **dadurch gekennzeichnet, dass** es ferner Folgendes umfasst:
- Mittel zur Synthese der numerischen Vorhersagen mit einem einzelnen Modell oder mit mehreren Modellen, die als Ausgabe mindestens eine Vorhersage mit mehreren Modellen bereitstellen, der eine Wahrscheinlichkeitsdichte mindestens einer Umweltvariablen zugeordnet ist, wobei die Synthesemittel Synthesealgorithmen mit mehreren Modellen umfassen;
- Mittel zur Gesamtsynthese und zum Leistungsvergleich, die insbesondere die Daten, die aus dem Vorhersagemodul mit mehreren Modellen stammen, mit denen des statistischen Vorhersagemoduls kombinieren.

3. Wettervorhersagesystem nach Anspruch 2, **dadurch gekennzeichnet, dass** es ferner einfache numerische Vorhersagemittel umfasst, die als Eingabe die Beobachtungen annehmen und als Ausgabe einfache numerische Vorhersagen von Umweltvariablen bereitstellen, wobei die einfachen numerischen Vorhersagemittel einfache globale Zirkulationsmodelle umfassen.

4. Wettervorhersagesystem nach Anspruch 3, **dadurch gekennzeichnet, dass** es ferner statistische Vorhersagemittel umfasst, die als Eingabe die Beobachtungen annehmen und als Ausgabe mindestens eine statistische Vorhersage mindestens einer Umweltvariablen bereitstellen, wobei die statistischen Vorhersagemittel statistische Modelle umfassen.

5. Wettervorhersagesystem nach Anspruch 4, **dadurch gekennzeichnet, dass** es ferner Mittel zur Disaggregationsverarbeitung (Maßstabsverkleinerung) numerischer und/oder statistischer Art umfasst.

6. Wettervorhersagesystem nach einem der vorhergehenden Ansprüche, **dadurch gekennzeichnet, dass** es ferner im Schritt des Leistungsvergleichs und der Gesamtsynthese Mittel zur Rückkopplung auf die Vorhersagemittel (20) umfasst.

7. Wettervorhersagesystem nach Anspruch 5, **dadurch gekennzeichnet, dass** die Mittel zur Synthese mit mehreren Modellen, zur statistischen Vorhersage, zur hybriden Vorhersage, zur Maßstabsverkleinerung, zum Leistungsvergleich oder zur Gesamtsynthese Bayessche statistische Methoden verwenden.

8. Wettervorhersagesystem nach einem der Ansprüche 1 bis 6, **dadurch gekennzeichnet, dass** die Mittel zur Vorhersage und zur statistischen Verarbeitung statistische Verfahren verwenden, die auf neuronale Netze zurückgreifen.

9. Wettervorhersagesystem nach einem der Ansprüche 1 bis 6, **dadurch gekennzeichnet, dass** die statistischen Vorhersagemittel Analogiemodelle einsetzen.

10. Wettervorhersagesystem nach einem der Ansprüche 1 bis 6, **dadurch gekennzeichnet, dass** die statistischen Vorhersagemodelle Persistenzmodelle einsetzen.

11. Wettervorhersagesystem nach einem der vorhergehenden Ansprüche, **dadurch gekennzeichnet, dass** es ferner (regionale, nationale oder internationale und öffentliche oder private) Mittel zum Bilden einer Schnittstelle mit mindestens einer Vorhersagebetriebszentrale umfasst, welche die numerischen Vorhersagen mit einem einzelnen Modell oder mit mehreren Modellen übertragen.

12. Wettervorhersageverfahren zum Einsetzen des Systems nach mindestens einem der vorhergehenden Ansprüche, umfassend folgende Schritte:
- einen Schritt des Erfassens von Beobachtungen;
- einen Schritt des Erfassens von numerischen Vorhersagen;
- einen Schritt der hybriden Vorhersage.

13. Wettervorhersageverfahren nach dem vorhergehenden Anspruch, **dadurch gekennzeichnet, dass** das Verfahren ferner Folgendes umfasst:
- einen Schritt der einfachen numerischen Vorhersage;
- einen Schritt der statistischen Vorhersage;
- einen Schritt der Vorhersage mit mehreren Modellen;
- einen Schritt der Verarbeitung nach Art einer Desaggregation oder Maßstabsverkleinerung;
- einen Schritt des Leistungsvergleichs und der Gesamtsynthese der Vorhersagen;
- einen Schritt der Rückkopplung bei dem Schritt des Leistungsvergleichs und der Gesamtsynthese.

## Claims

1. Climatic forecast system for the generating of an optimised forecast, implementing at least one computer comprising in particular a processor and a storage unit, means for remotely acquiring digital data via a digital network, said digital data being observations and single-model or multimodel digital forecasts,
with the system further comprising hybrid forecasting means for receiving as input said observations and said single-model or multimodel digital forecasts and providing as output at least one hybrid forecast
the system being **characterised in that** said hybrid forecasting means provide the hybrid forecast in the form of probability density and comprise the generating of a probability density function using at least the geometry of a probability density function generated by a first model and a particular value such as the median resulting from a probability density generated by a second model of another type, with the first model and the second model being chosen from among types of statistical models, simple general circulation models and multimodel synthesis algorithms.

2. Climate forecast system according to claim 1, **characterised in that** it further comprises:
- means of synthesis of said single-model or multimodel digital forecasts providing as output at least one multimodel forecast, to which is associated a probability density of at least one environmental variable, said means of synthesis comprising multimodel synthesis algorithms;
- means of final synthesis and of benchmarking, that combine, in particular, the data resulting from the multimodel forecast module with that of the statistical forecast module.

3. Climate forecast system according to claim 2, **characterised in that** it further comprises means of simple digital forecasting taking as input said observations and providing as output simple digital forecasts of environmental variables, said means of simple digital forecasting comprising simple general circulation models.

4. Climate forecast system according to claim 3, **characterised in that** it further comprises means of statistical forecasting that take as input said observations and that provide as output at least one statistical forecast of at least one environmental variable, with said means of statistical forecasting comprising statistical models.

5. Climate forecast system according to claim 4, **characterised in that** it further comprises means of downscaling, of a digital and/or statistical nature.

6. Climate forecast system as claimed in any preceding claim, **characterised in that** it further comprises, in the step of benchmarking and of general synthesis, means of retroaction on said means of forecasting (20).

7. Climate forecast system according to claim 5, **characterised in that** said means of multimodel synthesis, of statistical forecasting, of hybrid forecasting, of downscaling, of benchmarking, or of general synthesis use Bayesian statistical methods.

8. Climate forecast system according to any of claims 1 to 6, **characterised in that** said means of forecasting and of statistical processing use statistical methods that call upon neural networks.

9. Climate forecast system according to any of claims 1 to 6, **characterised in that** said means of statistical forecasts implement analogy models.

10. Climate forecast system according to any of claims 1 to 6, **characterised in that** said means of statistical forecasting implement persistence models.

11. Climate forecast system as claimed in any preceding claim, **characterised in that** it further comprises means of interfacing with at least one operational forecast centre (regional, national, or international, and public or private) that transmit said single-model or multimodel digital forecasts.

12. Climate forecast method for the implementation of the system according to at least one of the preceding claims, comprising the following steps:
- a step of acquiring observations;
- a step of acquiring digital forecasts;
- a step of hybrid forecasting.

13. Climate forecast method as claimed in the preceding claim, **characterised in that** said method furthermore comprises:
- a step of simple digital forecasting;
- a step of statistical forecasting;
- a step of multimodel forecasting;
- a step of downgrading or scale reducing;
- a step of benchmarking and of general synthesis of said forecasts;
- a step of retroaction during the step of benchmarking and general synthesis.
